# FASCICULE DE BREVET EUROPEEN

(11) **EP 2 152 460 B1**
(45) Date de publication et mention de la délivrance du brevet: **13.03.2013**
(21) Numéro de dépôt: 08805529.8
(22) Date de dépôt: 30.04.2008
(51) Int. Cl.: B23K 9/035, G21C 13/093

(54) **PROCÉDÉ DE RÉALISATION D'UN CUVELAGE POUR UNE PISCINE, UNE BÂCHE OU UNE ENCEINTE DE CONFINEMENT**
VERFAHREN ZUR HERSTELLUNG EINES FUTTERS FÜR EIN BECKEN, EINEN TANK ODER EIN CONTAINERGEHÄUSE
METHOD OF MAKING A LINER FOR A POOL, TANK OR CONTAINMENT ENCLOSURE

(30) Priorité: 04.05.2007 FR 0703231; 08.06.2007 FR 0704118; 24.10.2007 FR 0707471
(43) Date de publication de la demande: 17.02.2010
(73) Titulaire: Societat d'Obres i Treballs Subterranis del Pirineu (SOTS, S.L.), Andorre (AD)
(72) Inventeur: SIMON, Jean, F-38560 Champs sur Drac (FR)
(74) Mandataire: Dubreu, Sandrine
(86) Numéro de dépôt international: PCT/FR2008/000616
(87) Numéro de publication internationale: WO 2008/152220

(56) Documents cités:
- EP-A- 0 010 053
- EP-A- 0 191 672
- JP-A- 6 082 596
- JP-A- 59 030 475
- JP-A- 60 119 825
- JP-A- 62 062 290
- US-B1- 6 713 710

## Description

L'invention concerne un procédé de réalisation d'un cuvelage pour piscine, bâche ou enceinte de confinement, en particulier d'une enceinte de confinement d'une centrale nucléaire, comportant au moins le montage d'une série de tôles adjacentes et la soudure des tôles les unes aux autres pour former une partie d'une surface du cuvelage en réalisant un cordon de soudure.

### État de la technique

Le cuvelage d'une piscine, d'une enceinte ou d'une bâche de confinement est constitué par un revêtement métallique intérieur rapporté sur un ouvrage en béton, de manière à confiner les effluents et à garantir l'étanchéité de la piscine en fonctionnement normal ou accidentel. Le revêtement métallique est constitué de tôles soudées les unes aux autres.

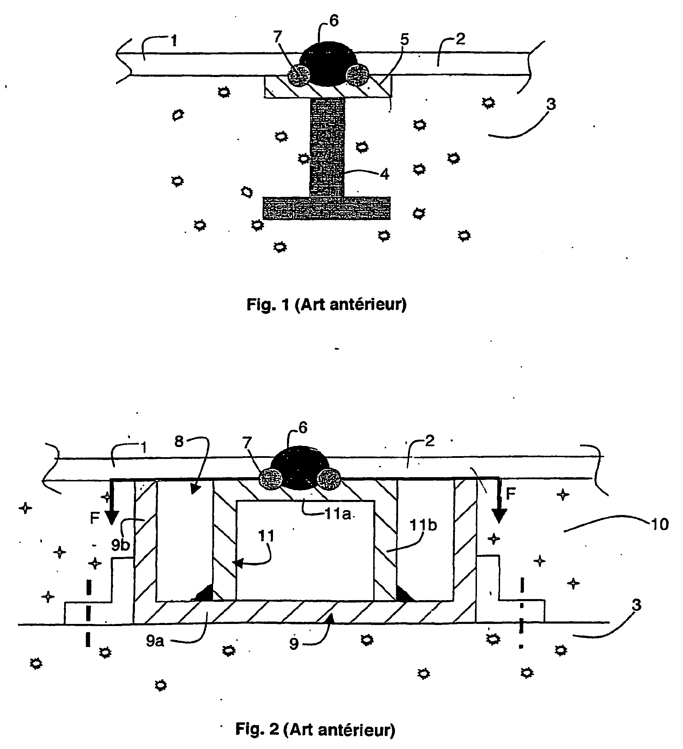

Habituellement, la soudure est réalisée par une technique de soudure employant une latte disposée à l'arrière des tôles, au niveau de la zone à souder. À titre d'exemple, sur la figure 1, deux tôles métalliques adjacentes 1 et 2 ont été soudées par la technique de soudure sur latte. Les tôles 1 et 2 sont, ainsi, fixées sur une paroi en béton 3. Un élément d'ancrage 4 noyé dans le béton est solidaire d'une latte 5 disposée dans te béton et en appui au niveau de la zone de soudure 6 contre les tôles 1 et 2.

Une telle technique n'est, cependant, pas mise en oeuvre car l'étanchéité ne peut pas être assurée à 100%. En effet, la soudure réalisée sur latte est difficile à contrôler. Elle ne peut donc pas être garantie. De plus, elle peut présenter des défauts rémanents 7 dû à des inclusions, des oxydations créées pendant la soudure et provoquant des amorces de rupture. Or, ces amorces de rupture peuvent remettre en cause la tenue mécanique du revêtement soumis à des sollicitations telles que des variations de pression et de température ou des vibrations, par exemple, dues à un séisme. En effet, avec cette technique de soudure sur latte, l'étanchéité du revêtement dépend de la zone de soudure 6 qui est en contact, par l'intermédiaire de la latte 5, à l'élément d'ancrage 4. Un défaut d'étanchéité met, alors, en péril la tenue mécanique de l'ancrage et donc du cuvelage.

Pour répondre à ce problème et comme représenté schématiquement sur la figure 2, il a été proposé de réaliser un canal 8 de récupération d'égouttures en cas de fuite, entre la paroi en béton 3 et les tôles 1 et 2. Un béton 10, dit béton seconde phase est alors disposé entre la paroi 3 et les tôles 1 et 2 et il renferme une première enceinte 9 fixée à la paroi en béton 3. Cette première enceinte 9 comporte une paroi inférieure 9a solidaire de la paroi en béton 3 (béton première phase) et des parois latérales 9b venant en contact avec les tôles 1 et 2. Sur la figure 2, la première enceinte 9 présente une section en forme de U. Une seconde enceinte 11 présentant des dimensions inférieures à celles de la première enceinte est disposée dans l'espace ménagé dans la première enceinte 9. Elle comporte une paroi supérieure 11 a venant en contact avec les tôles 1 et 2, au niveau de la zone de soudure 6. La paroi supérieure 11 a est prolongée par des parois latérales 11 b prenant en appui et solidarisées sur la paroi inférieure 9a de la première enceinte 9. Sur la figure 2, la seconde enceinte 11 présente une section en forme de U renversé. L'espace ménagé entre les parois latérales 9b et 11b constitue, ainsi, le canal 8 destiné à récupérer les égouttures en cas de fuite au niveau de la zone de soudure. La paroi supérieure 11a correspond à la latte 5 représentée sur la figure 1. À titre d'exemple, la demande de brevet EP-A-0191672 décrit un tel mode de réalisation.

Cependant, même avec un canal de récupération des égouttures, le risque de perte d'étanchéité demeure car, comme l'indiquent les flèches F sur la figure 2, il peut y avoir des fuites par capillarité jusqu'au béton seconde phase 10. De plus, ce système ne garantit pas une bonne interprétation de la soudure entre deux tôles, ni la prévention des risques de rupture de la soudure (rupture fragile ou par fatigue).

### Objet de l'invention

L'invention a pour but un procédé de réalisation d'un cuvelage pour piscine, bâche ou enceinte de confinement remédiant aux inconvénients de l'art antérieur. Plus particulièrement, l'invention a pour but un procédé permettant de garantir l'étanchéité des soudures réalisées et la tenue mécanique du cuvelage.

Selon l'invention, ce but est atteint par le procédé selon la revendication 1.

En particulier, ce but est atteint par le fait que le montage d'une série de tôles adjacentes comporte :
- la mise en place des tôles parallèlement à une première paroi à une distance prédéterminée de celle-ci, chaque tôle comportant des éléments d'ancrage, sur une première face disposée en regard de la première paroi
- et la mise en place d'un rail situé entre les éléments d'ancrage et comportant des parois latérales et un fond délimitant, avec deux tôles adjacentes, un espace au droit de la zone à souder,
et par le fait que la soudure des tôles adjacentes est une soudure bout à bout pleinement pénétrée et par le fait qu'elle est suivie d'une coulée de béton entre ladite première paroi et les tôles, les éléments d'ancrage des tôles étant, après la coulée de béton, totalement indépendants du cordon de soudure.

Un procédé selon l'invention permet de réaliser une jonction entre des tôles adjacentes par une soudure bout à bout pleinement pénétrée, répondant aux critères suivants :
- 100% sur toute la longueur du ou des cordons de soudure (ou joint) lors du test de contrôle visuel
- 100% sur toute la longueur du ou des cordons de soudure lors du test de ressuage
- 100% sur toute la longueur du ou des cordons de soudure lors du test de contrôle par rayons X
- 100% sur toute la longueur du ou des cordons de soudure lors du test de contrôle visuel réalisé à l'aide d'une « boîte à vide ».

L'ensemble des tests ci-dessus permet, ainsi, de garantir la qualité du joint en équivalence avec les tôles. Ainsi, ces tests garantissent que le ou les cordons de soudure ont les caractéristiques mécaniques des tôles. De ce fait, le joint est conforme aux codes de calcul. utilisés de manière courante dans le domaine technique de la fabrication d'enceintes de confinement d'une centrale nucléaire, ce qui garantit la pérennité du cuvelage (Cyclage thermique, séisme,...).

Enfin, le fait que les éléments d'ancrage des tôles soient, après la coulée de béton, totalement indépendants du cordon de soudure présente l'avantage, contrairement à l'art antérieur, de dissocier la fonction de résistance mécanique de la fonction d'étanchéité.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- les figures 1 et 2 représentent, schématiquement et en coupe, deux modes de réalisation d'une soudure entre deux tôles selon l'art antérieur.
- la figure 3 représente, en vue de face et en vue de côté, une tôle utilisée dans un procédé selon l'invention.
- la figure 4 représente, schématiquement et en coupe, les différentes étapes permettant la fixation d'une série de tôles sur une paroi en béton.
- la figure 5 représente, schématiquement et en coupe, la réalisation d'une soudure entre deux tôles adjacentes.
- la figure 6 représente, schématiquement et en coupe, la réalisation d'un contrôle par rayon X, après la soudure de deux tôles adjacentes.
- les figures 7 à 13 illustrent les différentes phases de réalisation d'un système d'ancrage d'un cuvelage à tôles soudées bout à bout, et à goulotte de récupération d'égoutture.
- les figures 14 à 21 illustrent une variante de réalisation d'un cuvelage à tôles soudées.

### Description de modes particuliers de réalisation

Le cuvelage d'une piscine, d'une bâche ou d'une enceinte de confinement est réalisé en montant successivement et côte à côte des séries de tôles adjacentes et en soudant lesdites tôles, de manière à revêtir l'ensemble des parois en béton de ladite piscine.

La tenue mécanique du cuvelage est, en particulier, dissociée de la fonction d'étanchéité au niveau des soudures, car les éléments permettant d'assurer la tenue mécanique du cuvelage ne sont pas en contact avec les zones ou cordons de soudure. Plus particulièrement, chaque tôle comporte sur la face disposée en regard de la paroi en béton des éléments d'ancrage assurant la tenue mécanique du cuvelage. Ces éléments d'ancrage sont totalement indépendants des zones de soudure, une fois le béton coulé. Ainsi, ils ne sont pas reliés aux zones de soudure.

De plus, les tôles adjacentes sont soudées par une soudure ou un cordon de soudure bout à bout (ou bord à bord) pleinement pénétré. Par soudure bout à bout pleinement pénétrée, on entend, la réalisation d'un cordon de soudure réunissant les bords de deux tôles adjacentes, les deux bords étant en général, séparés l'un de l'autre par un intervalle prédéterminé que le cordon de soudure vient pleinement combler. Par ailleurs, la soudure bout à bout pleinement pénétrée ne nécessite pas l'emploi d'une latte ou d'une surface d'appui comme dans l'art antérieur. Ceci permet d'obtenir un cordon de soudure ayant aucun défaut de jonction et sans risque de rupture due aux sollicitations en flexion provoquées par une latte ou une surface d'appui.

Enfin, un rail est mis en place au droit de la zone à souder. Un tel rail permet au moins de réaliser les contrôles des joints de cuvelage et notamment, les contrôles par rayons X.

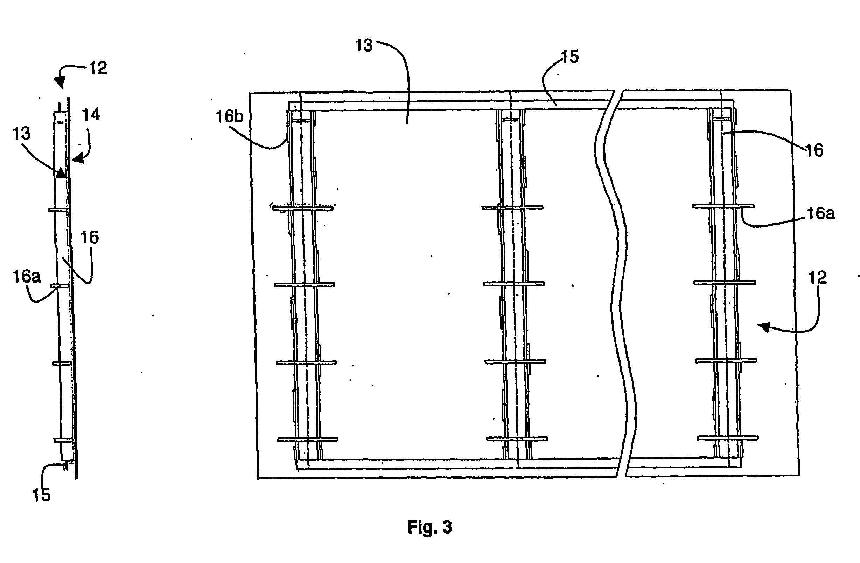

Un premier mode particulier de réalisation d'un tel cuvelage est, plus particulièrement, illustré sur les figures 3 à 6.

Comme représentée sur la figure 3, chaque tôle métallique 12 du cuvelage est munie de deux faces opposées :
- une première face 13 destinée à être disposée en regard de la paroi en béton à recouvrir
- et une seconde face 14 correspondant à la face par laquelle est réalisée la soudure.

Les deux faces opposées 13 et 14 sont reliées par des bords. Selon le type de soudure (corniche ou verticale montant), les bords des tôles métalliques 12 peuvent avoir des formes différentes. Les bords d'une tôle 12 comportent généralement deux parties : une première partie en contact avec la première face 13 et une seconde partie en contact avec la seconde face 14. La première partie forme avantageusement un angle droit avec la première face 13 tandis que la seconde partie est une partie en biseau. Or, pour une soudure verticale montante, la partie en biseau d'une tôle forme, de préférence, un angle de 60° avec la partie en biseau d'une tôle adjacente. À titre d'exemple, un bord d'une tôle de 6mm d'épaisseur, peut comporter une partie en biseau sur une épaisseur de 4mm, avec une inclinaison de l'ordre de 30° par rapport à la première partie dudit bord. De plus, pour une soudure verticale montante, les inclinaisons des parties en biseau de deux tôles adjacentes, par rapport au reste de leur bord, sont avantageusement identiques. Ce n'est pas le cas pour des tôles destinées à être soudées en corniche. En effet, pour une soudure en corniche, les secondes parties (parties en biseau) de deux tôles adjacentes forment respectivement un angle de 15° et un angle de 45° avec les secondes parties des bords associés.

De plus, dans ce premier mode de réalisation, la première face 13 de chaque tôle 12 comporte, sur toute sa périphérie, des cornières 15 en forme de L. Les cornières 15 sont, en effet, constituées par des première et seconde ailes sensiblement perpendiculaires. De plus, la première aile d'une cornière 15 est fixée à la première face 13 de la tôle 12, de manière à être sensiblement perpendiculaire à ladite première face et à proximité d'un bord de la tôle 12. Plus particulièrement, comme représenté sur la vue de côté de la figure 3, la position de la cornière 15 et la longueur de la seconde aile (aile parallèle à la première face 13) sont déterminées, de manière à ce que ladite seconde aile ne s'étende pas au-delà de la première face 13.

Dans ce mode de réalisation, la première face 13 de chaque tôle comporte également des éléments d'ancrage 16 assurant notamment la tenue mécanique du cuvelage. À titre d'exemple, sur la vue de face de la figure 3, trois éléments d'ancrage 16, formés par des profilés ayant une section en forme de U, sont soudés à la première face 13 de la tôle. Les trois éléments d'ancrage 16 sont disposés parallèlement les uns aux autres, dans le sens de la largeur de la tôle 12. Des encoches sont réalisées dans les parois latérales des éléments d'ancrage 16, c'est-à-dire dans les ailes de chaque U, pour placer et pointer des lames minces ou des plats 16a. Les soudures 16b réalisées pour fixer les éléments d'ancrage 16 sur la première face 13 de chaque tôle 12 peuvent être contrôlées par ressuage en atelier. Sur la figure 3, les soudures 16a sont discontinues. Elles pourraient, cependant, être continues.

Dans le premier mode de réalisation, une série de tôles 12 est ensuite montée et fixée sur une paroi en béton 3 pour former une partie d'une paroi du cuvelage. Les tôles 12 sont disposées successivement côte à côte, avec un pas prédéterminé entre deux tôles 12. Le pas est, par exemple de 2mm. Les tôles sont alors fixées parallèlement à la paroi en béton 3, à une distance prédéterminée.

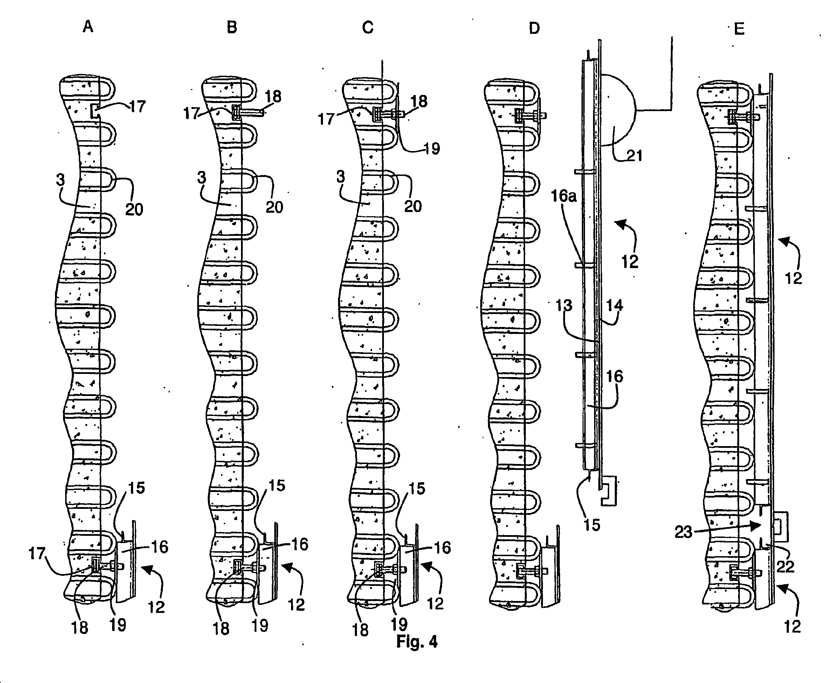

La figure 4, avec ses 5 vues en coupe A à E, illustre un mode particulier de fixation d'une série de tôles 12 adjacentes sur une paroi en béton 3. Une tôle 12 est fixée à la paroi en béton 3, par l'intermédiaire de certains éléments d'ancrage 16. Sur les vues A à E, des éléments d'ancrage 16 de deux tôles 12 sont, en effet, successivement fixés à des rails de type HALFEN 17 noyés dans la paroi en béton 3. La fixation est réalisée par l'intermédiaire de tiges filetées 18, chacune fixées par une extrémité à un rail de type HALFEN 17 et par une autre extrémité à une platine d'appui 19, soudée à un élément d'ancrage 16. Les tôles 12 reposent, alors, sur des attentes 20 faisant saillie de la paroi en béton 3.

Chaque tôle 12 est, par exemple, déplacée à l'aide d'un palonnier à ventouse 21 jusqu'à ce que certains éléments d'ancrage 16 viennent chacun en appui contre des platines d'appui 19 préalablement fixées aux rails de type HALFEN 17. Une fois la tôle 12 posée en appui contre les platines 19, sa position est ajustée verticalement et horizontalement en fonction des tôles adjacentes 12. Cet ajustement permet, par exemple, d'obtenir le pas prédéterminé entre deux tôles adjacentes. Puis, les éléments d'ancrage 16 posés en appui contre les platines d'appui 19 sont soudés auxdites platines 19. Les soudures ainsi réalisées peuvent, alors, être contrôlées sur site, par exemple par ressuage.

Lorsque les tôles 12 d'une série sont fixées à la paroi en béton 3 et comme représenté sur la vue E de la figure 4, chaque cornière 15 d'une tôle 12 constitue avec la cornière 15 associée d'une tôle 12 adjacente, en regard de la zone à souder, un rail 22 avantageusement muni d'une rainure centrale longitudinale 23. Ainsi, le rail 22 comporte des parois latérales et un fond, formés par les premières et secondes ailes des cornières 15 des deux tôles adjacentes et délimitant avec les premières faces des deux tôles adjacentes, un espace libre au droit de la zone à souder.

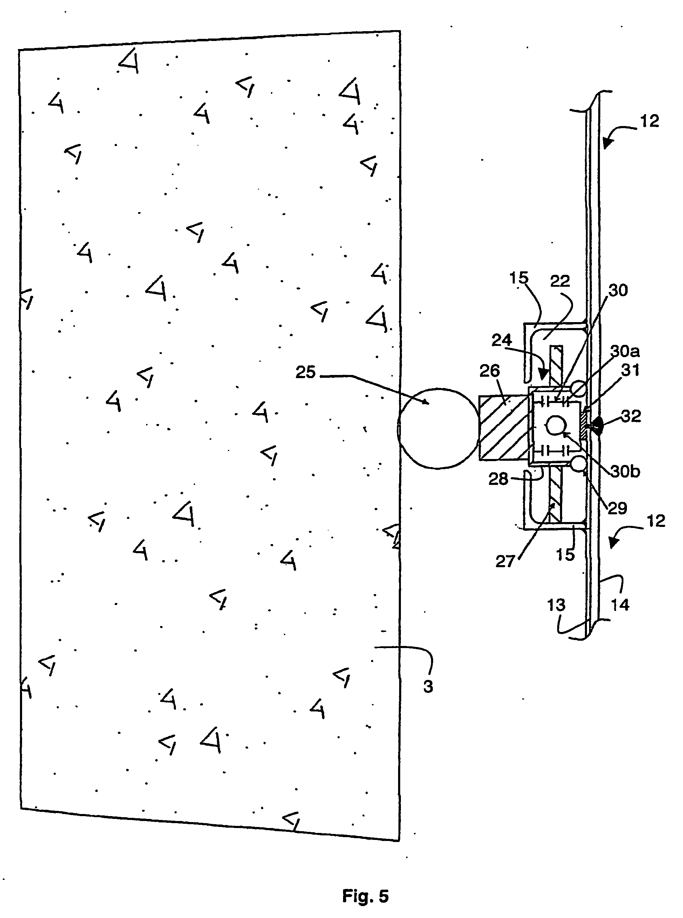

L'espace délimité par un tel rail 22 et par les premières faces des deux tôles est, plus particulièrement, destiné à recevoir un traînard mobile, lors de la réalisation de la soudure. Par traînard mobile, on entend un ensemble mécanique apte à se déplacer de manière contrôlée dans le rail 22. Ainsi, comme représenté sur la figure 5, un traînard mobile 24 est mis en place dans le rail 22. Il est maintenu dans le rail 22, contre les premières faces 13 des tôles 12, par l'intermédiaire d'un élément de support prenant appui entre la paroi en béton 3 et le traînard 24. L'élément de support est, par exemple, constitué par un vérin pneumatique 25 prenant appui contre la paroi en béton 3. Un élément de protection thermique 26 peut, par ailleurs être disposé entre ledit vérin 25 et le traînard 24.

Le traînard 24 est destiné à former une zone ou une atmosphère de gaz inerte, au niveau de la zone à souder, du côté des premières faces 13 des tôles 12. Le traînard 24 étant mobile, son mouvement suit le mouvement de l'appareil à souder, de manière à toujours former la zone de gaz inerte à l'endroit et au moment où la soudure est réalisée.

Le traînard 24 comporte donc un volume de diffusion de gaz neutre venant en contact avec les deux tôles adjacentes 12. Le volume de diffusion de gaz neutre est maintenu dans le rail 22 par une plaque support 27, permettant de régler l'altitude du volume de diffusion et la coulisse dans le rail 22. Le volume de diffusion est, plus particulièrement, formé par une goulotte 28 maintenue en appui, par le vérin pneumatique 25, sur les deux tôles 12. Un joint 29 est avantageusement disposé entre les tôles 12 et ladite goulotte de manière à rendre celle-ci étanche. De plus, un diffuseur de gaz inerte 30 comportant un tube d'injection de gaz neutre 30a et des orifices de sortie 30b est disposé, avec éventuellement de la paille d'acier inoxydable (non représentée sur la figure 5), dans l'espace ménagé par la goulotte 28.

De plus, sur la figure 5, une plaque en céramique 31 est disposée dans la goulotte 28, entre le diffuseur 30 et les premières faces 13 des tôles 12. Ladite plaque 31 comporte, avantageusement, une surface munie d'une rainure venant en appui contre les premières faces 13 (non représentée sur la figure 5). Ladite rainure est disposée en regard de la zone à souder et elle est destinée à localiser précisément le gaz inerte au niveau de la zone à souder. Le cordon de soudure 32 est, ensuite, réalisé du côté des secondes faces 14, à l'aide d'un appareil à souder tel qu'un appareil à souder de type MIG ou TIG. Une soudure à la goutte pourrait également être réalisée. Dans ce cas, la plaque en céramique 31 n'est pas nécessaire. Enfin, tout type de procédé de soudage peut être employé dès lors qu'il permet de réaliser une soudure bout à bout pleinement pénétrée. À titre d'exemple, le procédé de soudage peut aussi être un soudage par plasma, par laser ou par faisceau d'électrons.

Une fois le cordon de soudure 32 réalisé, le traînard est retiré du rail 22 et le cordon de soudure 32 est contrôlé. De manière classique, la soudure est contrôlée selon les tests ci-dessous :
- un test de ressuage,
- un test de contrôle par rayons X
- et des tests de contrôle visuel avec notamment un test de contrôle visuel réalisé à l'aide d'une boîte permettant de faire le vide au niveau de la zone soudée, également appelé « boîte à vide ».

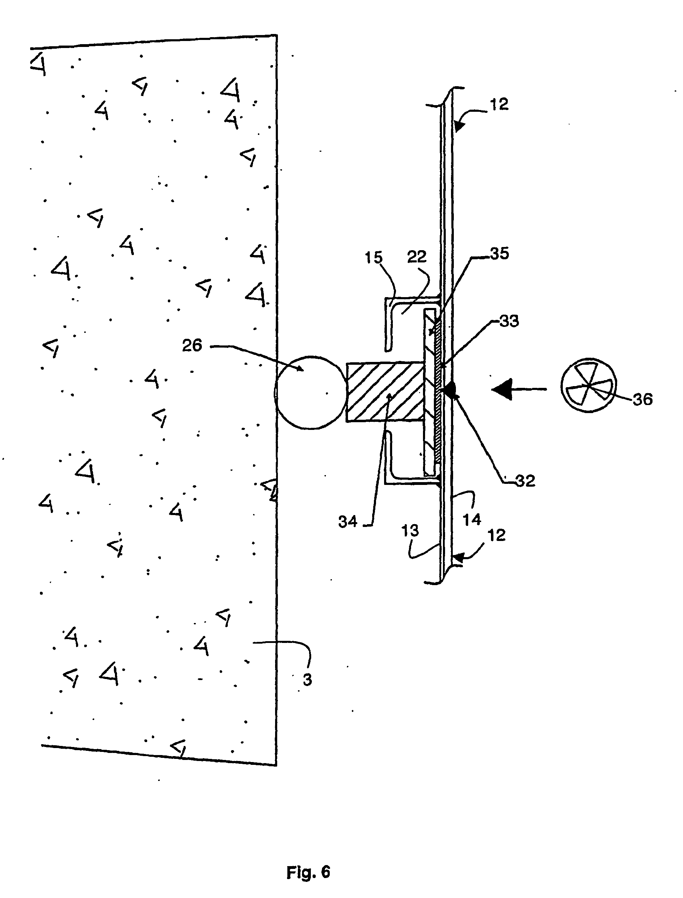

Plus particulièrement, le test de contrôle par rayons X est, comme représenté sur la figure 6, réalisé en plaçant un film radiographique 33 contre les premières faces 13 des tôles 12. Le film 33 est disposé dans le rail 22, au niveau de la zone soudée (ou cordon de soudure 32) à contrôler. Le film est maintenu contre les premières faces 13 par le vérin pneumatique 26 et une cale 34. Le vérin pneumatique 26 prend appui entre la paroi 3 et ladite cale 34. De plus, le film 33 peut être disposé sur une plaque de support 35 disposée dans le rail 22. Des rayons X 36 sont alors appliqués au niveau du cordon de soudure 32, de manière à transposer la soudure sur le film radiographique 33 et déterminer si celle-ci présente des défauts.

Si l'un des contrôles réalisés est négatif, les étapes de soudure et de contrôle peuvent être réitérées de manière à obtenir une soudure avec un coefficient de soudure proche de 1.

Une fois que toutes les tôles d'une série sont soudées les unes aux autres et soudées aux autres tôles précédemment montées et soudées, du béton, également appelé béton seconde phase, est coulé entre la paroi en béton 3 et lesdites tôles 12 soudées, de manière à combler l'espace existant entre ladite paroi 3 et les tôles 12. Les éléments d'ancrage 16 ainsi que les cornières 15 sont alors noyées dans ledit béton, assurant alors la tenue mécanique de la partie de la paroi du cuvelage réalisée. Par ailleurs, contrairement à l'art antérieur, une fois les soudures réalisées et contrôlées; lesdits éléments d'ancrage 16 et les cornières 15 ne sont pas en contact direct avec les cordons de soudure 32. Ceci permet de dissocier la fonction d'étanchéité assurée par les cordons de soudure 32 et la fonction de tenue mécanique assurée par les éléments d'ancrage 16 et les cornières 15.

Un procédé de réalisation selon l'invention permet alors d'obtenir une soudure ayant la qualité et plus particulièrement les caractéristiques mécaniques des tôles métalliques. Ceci présente l'avantage de ne pas avoir besoin de tenir compte de caractéristiques particulières des soudures lors des calculs de résistance.

Les tôles soudées servent, par ailleurs, de coffrage pour couler le béton seconde phase entre la paroi en béton 3 et lesdites tôles 12. Ceci permet également d'améliorer le contact entre les tôles 12 et ledit béton. De plus, les éléments d'ancrage peuvent être en acier ferritique car ils sont noyés dans le béton seconde phase.

Enfin, l'opération de soudure étant réalisée dans une atmosphère de gaz inerte, cela permet d'obtenir des soudures de très bonne qualité, conforme aux exigences du code de sécurité en vigueur dans le domaine des centrales nucléaires. Les contrôles des soudures peuvent, de plus, être réalisés pendant la réalisation du cuvelage. L'étanchéité du cuvelage peut alors être garantie.

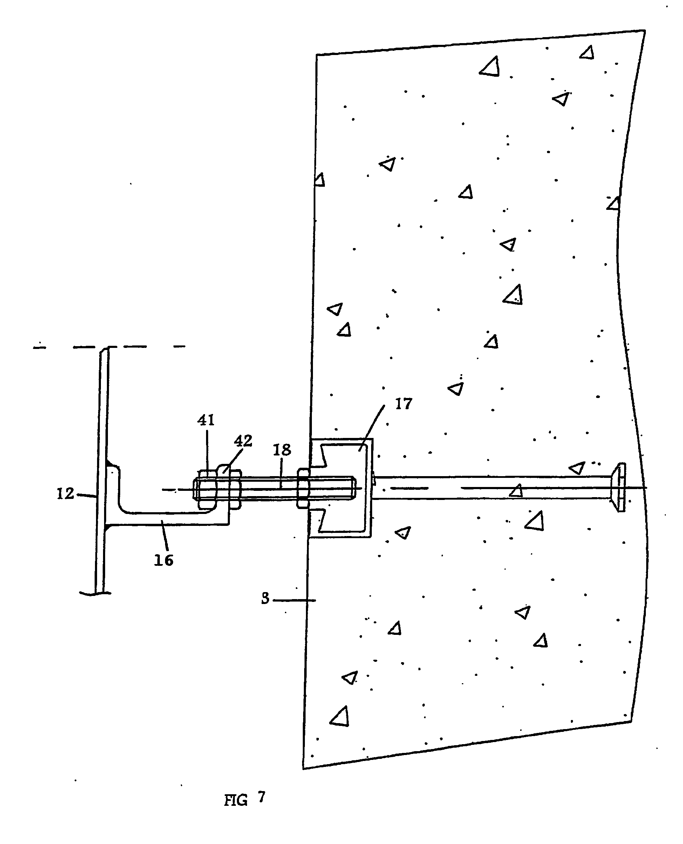

Le deuxième mode de réalisation des figures 7 à 13 représente les différentes phases de réalisation d'un cuvelage à tôles soudées bout à bout, et à goulotte de récupération d'égoutture. Le procédé utilisé est similaire à celui des figures 3 à 6, mais les cornières 15 en forme de L des tôles 12 sont remplacées par une goulotte 40 de récupération d'égoutture au droit du cordon de soudure 32. Les mêmes numéros de repères seront utilisés par la suite pour désigner des pièces identiques à celles des figures 3 à 6.

Sur la figure 7, l'élément d'ancrage 16, en forme de U d'une première tôle 12 métallique est fixé à la tige filetée 18 au moyen d'un écrou de réglage 41 et d'un contre-écrou 42. L'extrémité opposée de la tige 18 est assujettie dans un ancrage 17 du type rail Halfen noyé dans le béton 3 de première phase. L'écrou de réglage 41 permet d'ajuster la distance entre la face supérieure du béton 3 et la tôle 12.

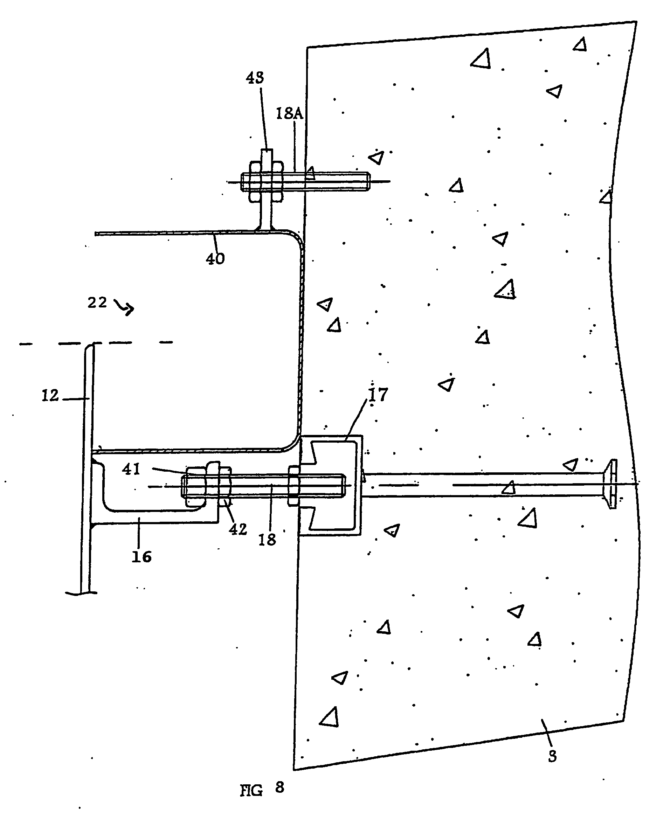

La figure 8 montre la mise en place d'une goulotte 40 de récupération d'égoutture. La goulotte 40 présente une forme en U prenant appui sur le béton 3, et dont l'une des branches parallèles s'étend perpendiculairement à la tôle 12 en retrait de l'élément d'ancrage 16. Ainsi, les branches parallèles de la goulotte 40 ainsi que le fond de ladite goulotte 40 délimitent, avec les premières faces des tôles adjacentes, un espace au droit de la zone à souder.

La goulotte 40 est maintenue en place au moyen d'une patte de fixation 43 montée de manière ajustable sur une tige filetée 18A ancrée dans le béton 3. Ainsi, les moyens de fixation de la goulotte 40 sur la paroi en béton 3 sont totalement indépendants des éléments d'ancrage 16. La goulotte 40 constitue un rail, tel que celui délimité dans le premier mode de réalisation par les cornières en forme de L.

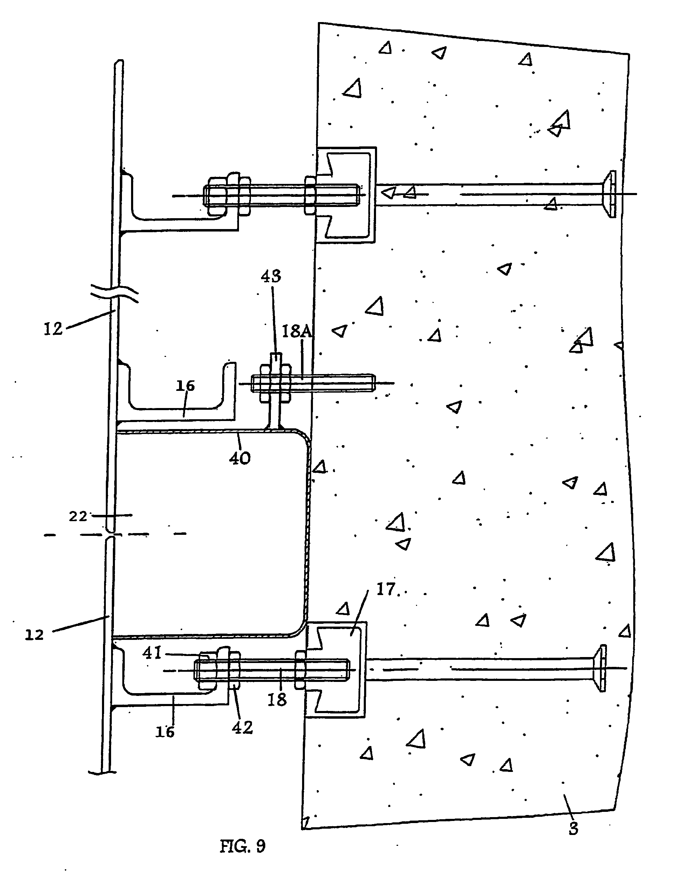

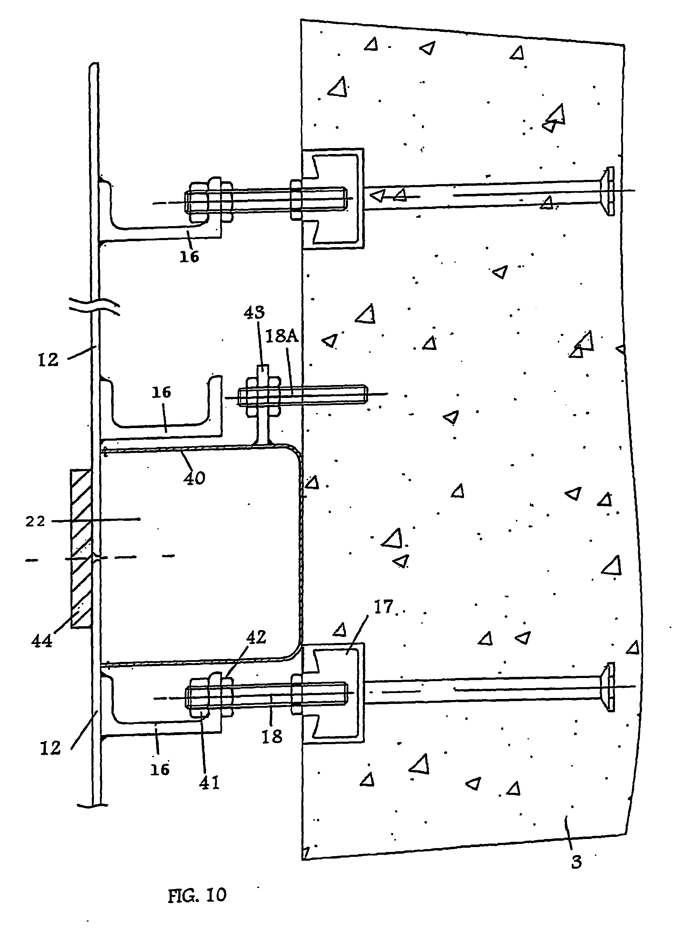

Sur les figures 9 et 10, une seconde tôle 12 est positionnée bout à bout dans un même plan avec la première tôle 12, suivie de la mise en place d'une clame d'accostage 44 à l'opposé de la goulotte 40. La zone à souder des deux tôles 12 se trouve à égale distance des branches parallèles de la goulotte 40.

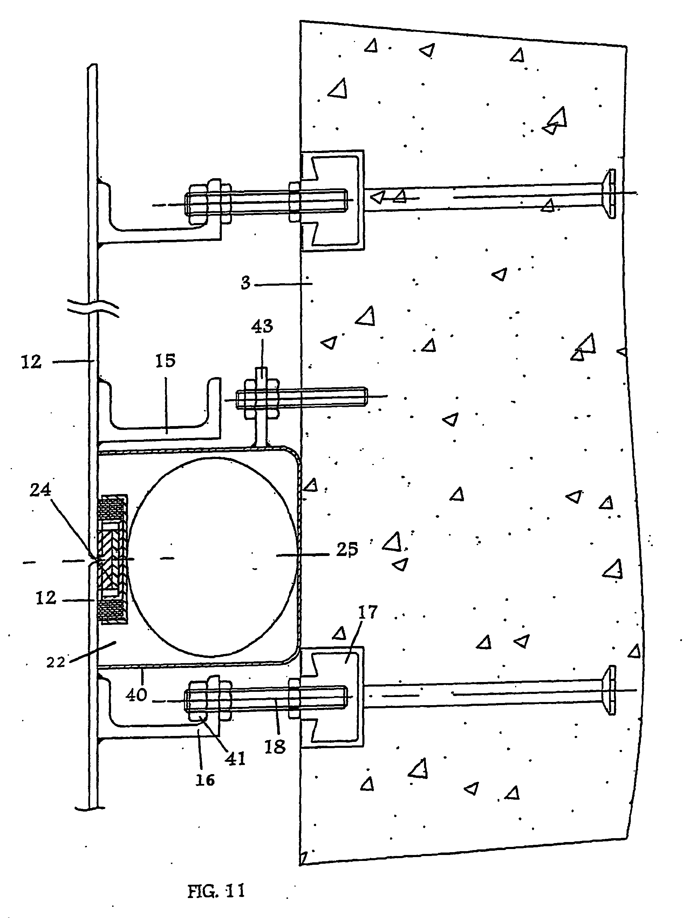

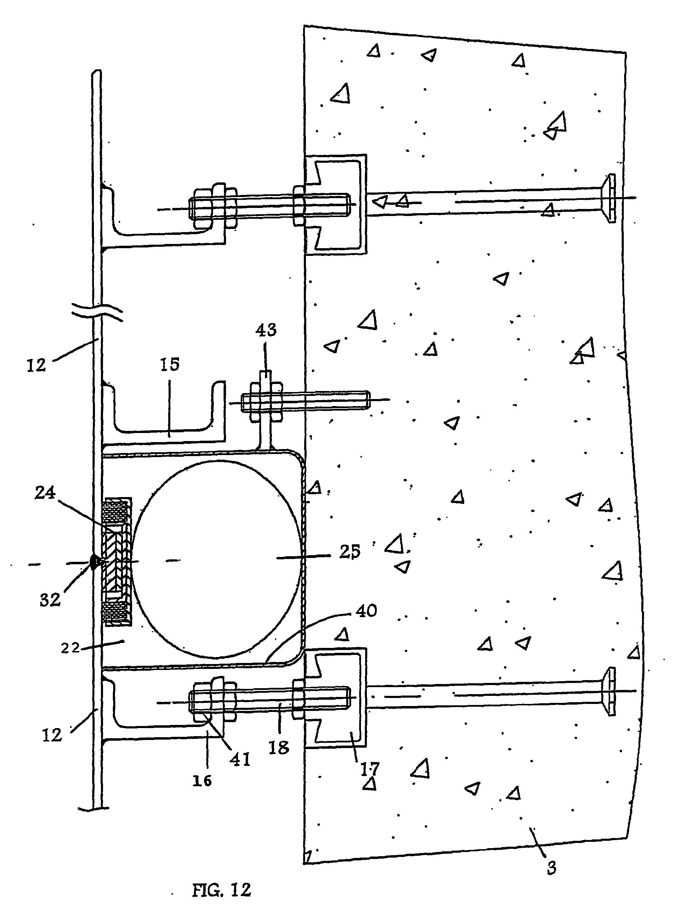

La figure 11 illustre la mise en place du traînard mobile 24 maintenu à l'intérieur de la goulotte 40 contre les tôles 12 par l'intermédiaire d'un élément de support prenant appui entre la paroi en béton 3 et le traînard 24. L'élément de support est, par exemple, constitué par un vérin pneumatique 25 ou un boudin gonflable, prenant appui contre la paroi en béton 3. La figure 12 montre la phase de soudage des deux tôles 12.

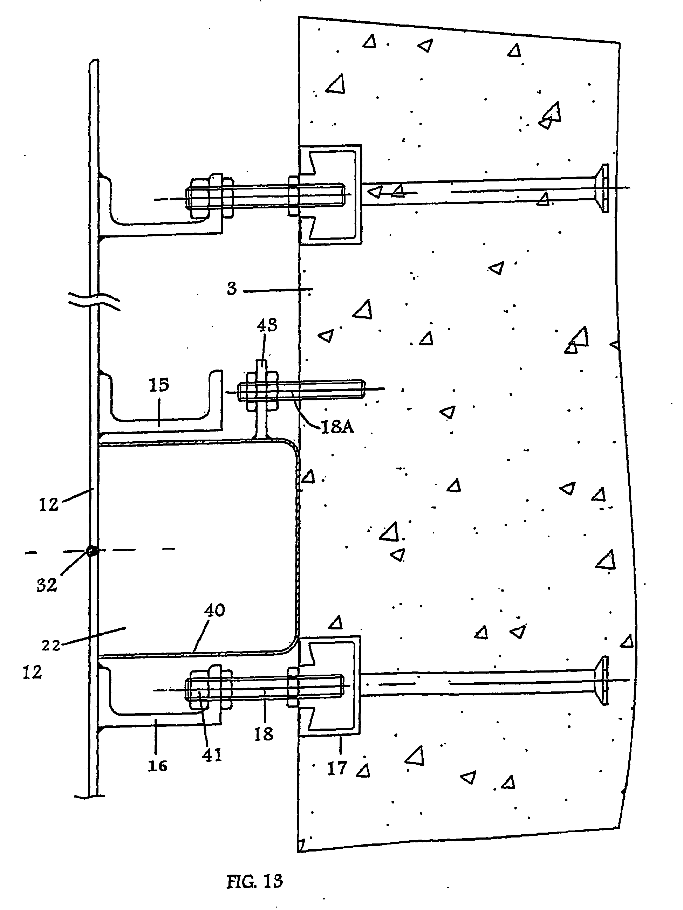

Sur la figure 13, on retire le traînard 24 et le vérin pneumatique 25, et on effectue ensuite les tests de contrôle du cordon de soudure 32, comme décrits précédemment en référence à la figure 6. Lorsque le test est positif, on peut effectuer la coulée finale du béton de deuxième phase entre le béton 3 de première phase et les tôles 12.

La présence de la goulotte 40 de récupération d'égoutture est une sécurité supplémentaire qui garantit la fiabilité de l'étanchéité du cuvelage. Elle peut également permettre de réaliser le cordon de soudure 32, à l'aide du traînard mobile 24. Dans ce cas, elle forme le rail 22.

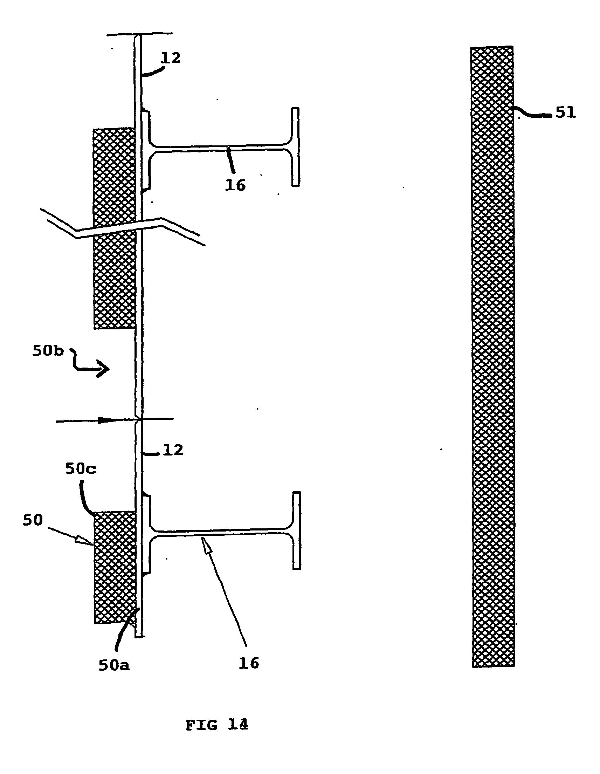

Le troisième mode de réalisation des figures 14 à 21 représente les différentes phases de réalisation d'un cuvelage pour piscine ou bâche de confinement, en une seule phase de bétonnage. Les mêmes numéros de repères seront utilisés par la suite pour désigner des pièces identiques à celles des figures 3 à 13.

Avec une seule phase de bétonnage et contrairement aux précédents modes de réalisation, les tôles 12 ne sont pas fixées à une paroi en béton 3, mais à une des deux parois 50 et 51, en général métalliques, d'un coffrage préalablement mis en place. La distance séparant les deux parois 50 et 51 détermine l'épaisseur de la partie du cuvelage réalisé.

Ainsi, la figure 14 représente deux tôles 12 adjacentes disposées et fixées sur une des faces 50a de la paroi 50. Les tôles 12 sont disposées côte à côte et leurs bords adjacents définissent la zone à souder.

De plus, les tôles 12 sont disposées en face de l'autre paroi 51 du coffrage. Les éléments d'ancrage 16 des tôles 12 font, alors, saillie en direction de ladite paroi 51.

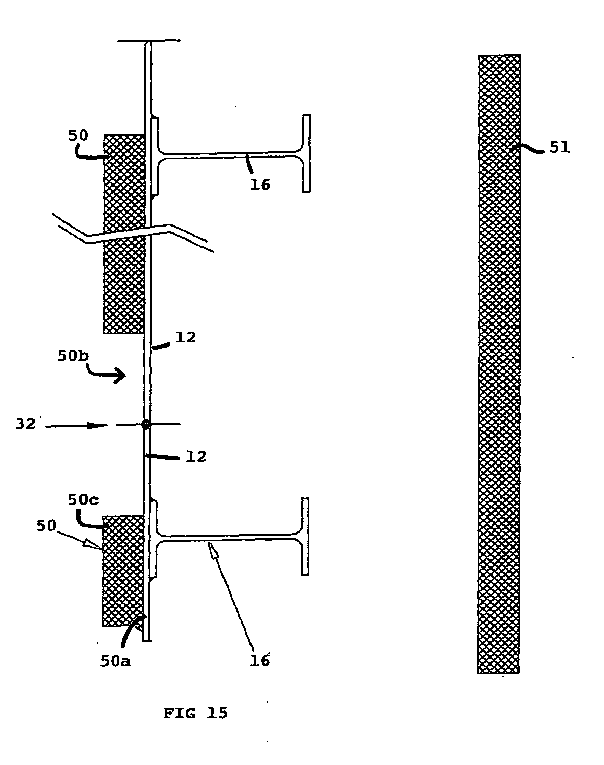

La paroi 50 recevant les tôles 12 comporte également une ouverture 50b permettant d'accéder, par la face 50c de la paroi 50, à la zone à souder et donc de réaliser, comme représenté sur la figure 15, le cordon de soudure 32.

Le cordon de soudure 32 est, avantageusement réalisé par la face 50c de la paroi 50 (c'est-à-dire côté gauche par rapport à la paroi 50 sur les figures 14 et 15) alors que les tôles 12 sont disposées sur la face 50a de la paroi 50 (c'est-à-dire côté droit par rapport à la paroi 50 sur les figures 14 et 15). La soudure est, ensuite, contrôlée.

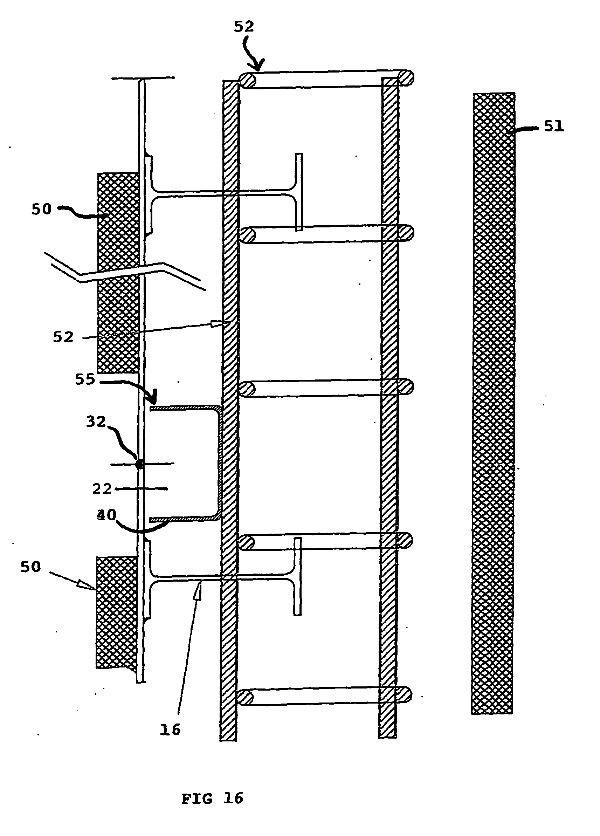

Ensuite, comme représenté sur la figure 16, un ferraillage 52 est disposé entre les tôles 12 et la paroi 51 et une goulotte de récupération d'égoutture 40 est disposée entre les tôles 12 et ledit ferraillage, au droit du cordon de soudure 32. La goulotte de récupération d'égoutture 40 présente une forme en U et a des branches parallèles s'étendant perpendiculairement aux deux tôles adjacentes 12. Elle prend, ainsi, appui sur le ferraillage 52. De plus, le cordon de soudure 32 des tôles 12 se trouve, de préférence, à égale distance des branches parallèles de la goulotte 40.

Un joint d'étanchéité 53 est, ensuite, disposé dans la goulotte de récupération d'égoutture 40. Le joint d'étanchéité 53 assure, par l'activation d'un système de mise en pression 54, l'étanchéité entre les tôles 12 et la goulotte 40 et, plus particulièrement, l'extrémité des branches de la goulotte 40, notamment lorsqu'il y a un jeu 55 entre les branches de la goulotte 40 et les tôles 12.

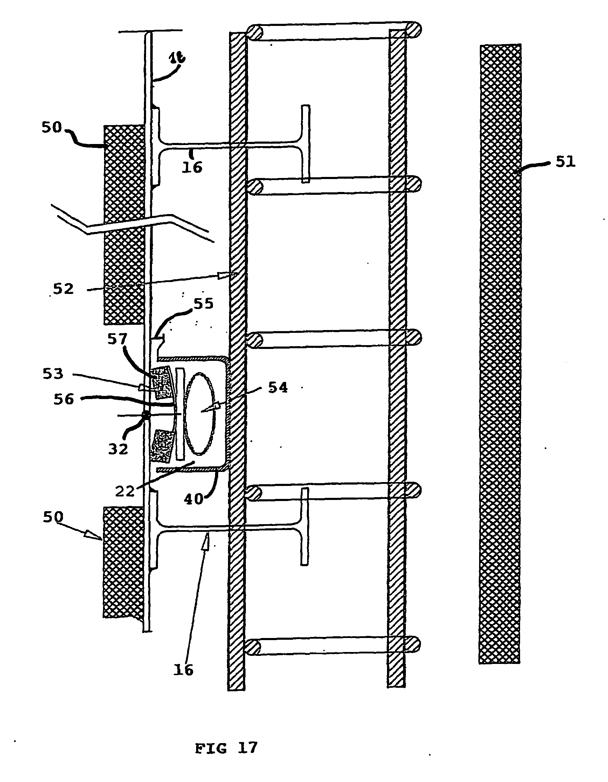

Le joint d'étanchéité 53 est, en particulier, constitué d'une lame 56 flexible sensiblement courbe dans une position de repos. La lame est munie, à chacune de ses extrémités, d'un patin en caoutchouc 57. Le joint 53 est, ainsi, installé dans la goulotte de récupération d'égoutture 40 dans sa position de repos (figure 17), en disposant chaque patin 57 contre une tôle 12, de part et d'autre du cordon de soudure 32. Le cordon de soudure 32 se trouve, avantageusement, à égale distance des patins 57.

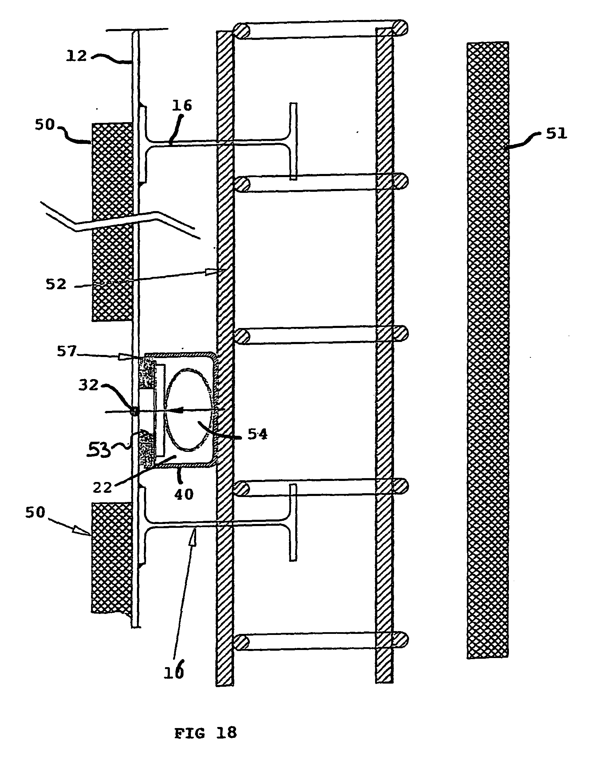

Puis, comme représenté sur la figure 18, lors de l'activation du système de mise en pression 54, le joint d'étanchéité 53 s'aplatit et les patins 57 sont plaqués contre les tôles 12 et obstruent l'espace libre entre les tôles 12 et les branches de la goulotte 40. Les patins 57 assurent, ainsi, l'étanchéité entre la goulotte 40 et les tôles 12, en compensant le jeu 55.

Les dimensions de la lame 56 et des patins 57 sont, plus particulièrement, choisies pour assurer l'étanchéité entre la goulotte 40 et les tôles 12, lorsque la lame est aplatie par le système de mise en pression. Le joint 53 permet alors d'isoler l'intérieur de la goulotte 40, lorsque le système de mise en pression 54 est activé. Le système de mise en pression 54 est, par exemple, un vérin pneumatique ou un boudin gonflable. Lorsqu'il est activé, le système de mise en pression exerce une pression sur la lame flexible, avantageusement en son centre. La lame passer alors d'une position courbe (position de repos) à une position aplatie. Cela entraîne un déplacement des patins 57, de manière à ce qu'ils obstruent l'espace entre l'extrémité des branches de la goulotte 40 et les tôles 12.

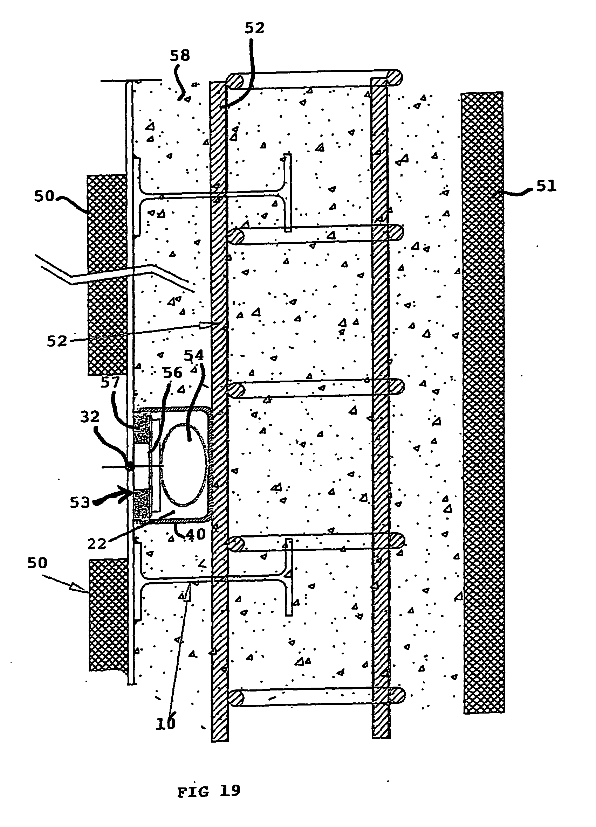

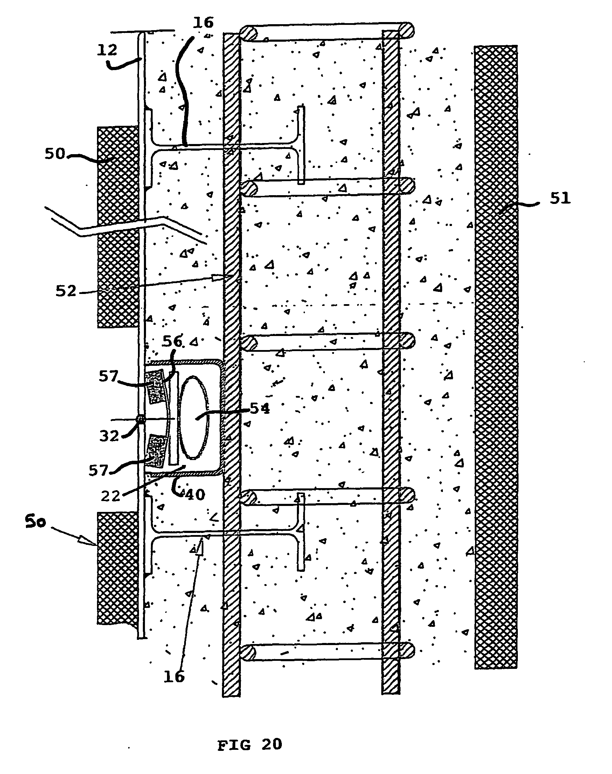

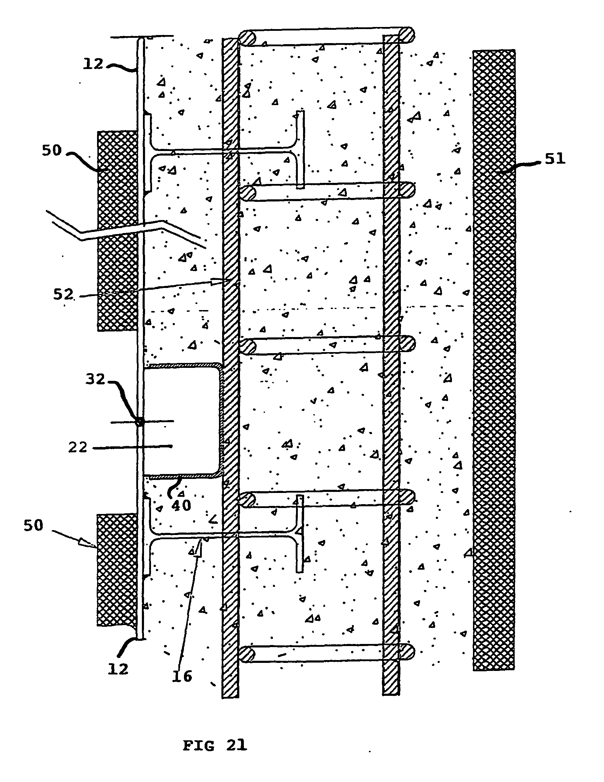

Du béton 58 est, ensuite coulé entre la paroi 51 et les tôles 12 (figure 19), noyant le ferraillage 52 et les éléments d'ancrage 16. Par contre, l'étanchéité de la goulotte 40 étant assurée par le joint 53 pendant la coulée du béton 58, celui-ci ne pénètre pas à l'intérieur de la goulotte 40. Une fois le béton 58 pris, le système de mise en pression 54 est désactivé (figure 20). Le joint 53 reprend sa position de repos avant d'être retiré (figure 21), laissant, ainsi, le passage pour la récupération des égouttures et l'introduction des appareils de contrôle pour la soudure, tels que ceux décrits dans le premier mode de réalisation.

Sur les figures 14 à 21, le cordon de soudure 32 a été réalisé avant l'installation du ferraillage 52 et de la goulotte 40. Cependant, dans une variante de réalisation, le cordon de soudure 32 peut être réalisé après l'installation de la goulotte 40. Plus particulièrement, dans ce cas, le cordon de soudure 32 peut être réalisé comme représenté sur les figures 10 à 13, avec un traînard mobile 24, tel que celui représenté sur la figure 5 et disposé dans ladite goulotte 40. Le traînard mobile 24 comporte un volume de diffusion de gaz neutre venant en contact avec les deux tôles adjacentes 12 sous l'action d'un élément de support prenant appui entre la goulotte 40 et le traînard 24. Une fois la soudure d'étanchéité entre des tôles adjacentes 12 dans une atmosphère de gaz neutre réalisée, le traînard est retiré. Dans cette variante de réalisation, la goulotte de récupération d'égoutture 40 est disposée au droit de la zone à souder et non du cordon de soudure 32 et les patins 57 du joint d'étanchéité 53 sont respectivement disposés de part et d'autre de la zone à souder avant l'activation du système de mise en pression 54.

De même, bien que la réalisation de l'étanchéité entre les tôles 12 et la goulotte de récupération d'égoutture 40, avant la coulée du béton, a été décrite dans le cas d'une phase unique de bétonnage, elle peut également être utilisé dans les modes de réalisation comportant deux phases de bétonnage.

En particulier, dans le mode de réalisation représenté sur les figures 7 à 13, le cordon de soudure 32 est avantageusement réalisé après la mise en place de la goulotte de récupération 40 prenant en appui contre la paroi en béton 3 de première phase. Un joint d'étanchéité assure, alors, l'étanchéité dans la goulotte de récupération des égouttures 40 lors de la coulée finale du béton de deuxième phase entre la paroi en béton 3 de première phase et les tôles 12.

## Revendications

1. Procédé de réalisation d'un cuvelage pour piscine, bâche ou enceinte de confinement comportant au moins le montage d'une série de tôles (12) adjacentes et la soudure des tôles (12) les unes aux autres pour former une partie d'une surface du cuvelage en réalisant un cordon de soudure (32), comportant
- la mise en place des tôles (12) parallèlement à une première paroi à une distance prédéterminée de celle-ci, chaque tôle (12) comportant des éléments d'ancrage (16), sur une première face (13) disposée en regard de la première paroi (3, 51), **caractérisé en ce que** le montage d'une série de tôles (12) adjacentes comporte:
- la mise en place d'un rail (22) situé entre les éléments d'ancrage (16) de deux tôles adjacentes et comportant des parois latérales et un fond délimitant au droit de la zone à souder, avec les deux tôles (12) adjacentes, un espace de contrôle du cordon de soudure (32),
et **en ce que** la soudure des tôles adjacentes (12) est une soudure bout à bout pleinement pénétrée visible depuis ledit espace de contrôle et la soudure est suivie d'une coulée de béton entre ladite première paroi (3, 51) et les tôles (12),
les éléments d'ancrage (16) des tôles (12) étant, après la coulée de béton, totalement indépendants du cordon de soudure (32).

2. Procédé selon la revendication 1, **caractérisé en ce que** chaque tôle (12) comporte, sur la première face (13), des cornières (15) en forme de L constituant chacune avec la cornière (15) associée d'une tôle adjacente (12), en regard de la zone à souder, le rail (22), lors de la mise en place et de la fixation des tôles (12) adjacentes.

3. Procédé selon la revendication 1, **caractérisé en ce que** le rail (22) est une goulotte de récupération d'égoutture (40).

4. Procédé selon la revendication 3, **caractérisé en ce que** la goulotte de récupération d'égoutture (40) présente une forme en U ayant des branches parallèles s'étendant perpendiculairement aux deux tôles adjacentes (12).

5. Procédé selon l'une des revendications 3 et 4, **caractérisé en ce qu'**un joint d'étanchéité (53), assurant l'étanchéité entre deux tôles adjacentes (12) et la goulotte de récupération d'égoutture (40) par l'activation d'un système de mise en pression (54), est mis en place dans la goulotte de récupération d'égoutture (40), avant la coulée de béton et **en ce que** le système de mise en pression (54) est désactivé et le joint d'étanchéité (53) est retiré avant la prise du béton.

6. Procédé selon la revendication 5, **caractérisé en ce que** le joint d'étanchéité (53) étant constitué d'une lame (56) flexible, sensiblement courbe dans une position de repos et munie, à chacune de ses extrémités, d'un patin en caoutchouc (57), ledit joint (53) est installé dans la goulotte de récupération d'égoutture (40) dans sa position de repos, en disposant chaque patin (57) contre une tôle (12), de part et d'autre de la zone à souder ou du cordon de soudure (32).

7. Procédé selon la revendication 6, **caractérisé en ce que**, lors de l'activation du système de mise en pression (54), le joint d'étanchéité (53) s'aplatit et les patins (57) assurent l'étanchéité entre les branches de la goulotte (40) et les tôles (12).

8. Procédé selon l'une quelconque des revendications 1 à 7, **caractérisé en ce que** la mise en place des tôles consiste à fixer les tôles (12) contre une seconde paroi (50) formant, avec la première paroi (51) un coffrage, les tôles (12) étant disposées en regard de la première paroi (51).

9. Procédé selon la revendication 8, **caractérisé en ce que** la seconde paroi (50) comporte au moins une ouverture (50b) permettant de réaliser le cordon de soudure (32) des tôles (12), du côté (50c) de la seconde paroi (50) opposé au côté (50a) recevant les tôles (12).

10. Procédé selon l'une quelconque des revendications 8 et 9, **caractérisé en ce qu'**il comporte l'installation d'un ferraillage (52) entre les tôles (12) et la première paroi (51), avant la mise en place de la goulotte de récupération d'égoutture (40), ladite goulotte (40) étant en appui contre le ferraillage (52) et **en ce que** la soudure des tôles (12) est réalisée avant l'installation du ferraillage (52).

11. Procédé selon l'une quelconque des revendications 1 à 10, **caractérisé en ce que** la soudure des tôles (12) étant réalisée après la mise en place du rail, elle consiste :
- à introduire, dans le rail (22), un traînard mobile (24) comportant un volume de diffusion de gaz neutre venant en contact avec les deux tôles adjacentes (12) sous l'action d'un élément de support prenant appui entre le rail (22) et le traînard (24),
- à réaliser le cordon de soudure (32) entre deux tôles adjacentes (12) dans une atmosphère de gaz neutre
- et à retirer le traînard (24).

12. Procédé selon la revendication 11, **caractérisé en ce que** le traînard (24) comporte une goulotte (28) étanche, maintenue en appui sur lesdites tôles (12), un diffuseur de gaz inerte (30) étant disposé dans la goulotte (28) étanche.

13. Procédé selon la revendication 12, **caractérisé en ce qu'**une plaque en céramique (31) est disposée dans la goulotte (28) étanche, entre le diffuseur de gaz inerte (30) et les premières faces (13) desdites tôles (12), et elle comporte une surface munie d'une rainure venant en appui contre les premières faces (13) des tôles adjacentes (12), ladite rainure étant disposée en regard de la zone à souder.

14. Procédé selon l'une quelconque des revendications 1 à 13, **caractérisé en ce que** la soudure est réalisée par un procédé de soudage choisi parmi le soudage TIG, le soudage MIG, le soudage plasma, le soudage par laser et le soudage par faisceau d'électrons.

15. Procédé selon l'une quelconque des revendications 1 à 14, **caractérisé en ce que** la coulée de béton est précédée d'une étape de contrôle du cordon de soudure (32) comportant un test de ressuage, un test de contrôle par rayons X et au moins un test de contrôle visuel.

## Claims

1. A method for making a covering for a containment pool, tank or enclosure comprising at least assembly of a series of adjacent sheets (12) and welding of the sheets (12) to one another to form a part of a surface of the covering by making a weld bead (32), comprising placing the sheets (12) parallel to a first wall at a predetermined distance from the latter, each sheet (12) comprising anchoring elements (16), on a first face (13) arranged facing the first wall (3, 51), **characterized in that** assembly of a series of adjacent sheets (12) comprises:
- placing a rail (22) situated between the anchoring elements (16) and comprising side walls and a back base delineating, with two adjacent sheets (12), a space facing the area to be welded,
and that welding of the adjacent sheets (12) is a full-penetration butt welding and is followed by pouring concrete between said first wall (3, 51) and the sheets (12), the anchoring elements (16) of the sheets (12) being completely independent from the weld bead (32) after the concrete has been poured.

2. The method according to claim 1, **characterized in that**, on the first face (13), each sheet (12) comprises L-shaped angles (15) each forming the rail (22) facing the area to be welded, with the associated angle (15) of an adjacent sheet (12), when the adjacent sheets (12) are fitted and secured.

3. The method according to claim 1, **characterized in that** the rail (22) is a drip recovery gutter (40).

4. The method according to claim 3, **characterized in that** the drip recovery gutter (40) presents a U shape having parallel branches extending perpendicularly to the two adjacent sheets (12).

5. The method according to one of claims 3 and 4, **characterized in that** a seal (53), providing the tightness between two adjacent sheets (12) and the drip recovery gutter (40) by activation of a pressurizing system (54), is fitted in the drip recovery gutter (40), before the concrete is poured, and **in that** the pressurizing system (54) is deactivated and the seal (53) is removed before the concrete has set.

6. The method according to claim 5, **characterized in that** the seal (53) being formed by a flexible blade (56), substantially curved in a rest position and provided with a rubber pad (57) at each of its ends, said seal (53) is fitted in the drip recovery gutter (40) in its rest position, each pad (57) being arranged against a sheet (12), on each side of the area to be welded or of the weld bead (32).

7. The method according to claim 6, **characterized in that**, when the pressurizing system (54) is activated, the seal (53) is flattened and the pads (57) provide the tightness between the branches of the gutter (40) and the sheets (12).

8. The method according to any one of claims 1 to 7, **characterized in that** placing of the sheets consists in fixing the sheets (12) against a second wall (50) forming a formwork with the first wall (51), the sheets (12) being arranged facing the first wall (51).

9. The method according to claim 8, **characterized in that** the second wall (50) comprises at least one opening (50b) enabling the weld bead (32) of the sheets (12) to be made, on the side (50c) of the second wall (50) opposite the side (50a) receiving the sheets (12).

10. The method according to any one of claims 8 and 9, **characterized in that** it comprises installation of a reinforcement (52) between the sheets (12) and the first wall (51), before the drip recovery gutter (40) is fitted, said gutter (40) pressing against the formwork (52), and that welding of the sheets (12) is performed before the formwork (52) is installed.

11. The method according to any one of claims 1 to 10, **characterized in that** welding of the sheets (12) being performed after the rail has been fitted, it consists:
- in inserting a movable saddle (24) in the rail (22), said saddle comprising a neutral gas diffusion volume coming into contact with the two adjacent sheets (12) due to the action of a support element pressing between the rail (22) and saddle (24),
- in making the weld bead (32) between two adjacent sheets (12) in a neutral gas atmosphere,
- and in removing the saddle (24).

12. The method according to claim 11, **characterized in that** the saddle (24) comprises a tightly sealed gutter (28) held pressing on said sheets (12), an inert gas diffuser (30) being arranged in the tightly sealed gutter (28).

13. The method according to claim 12, **characterized in that** a ceramic plate (31) is arranged in the tightly sealed gutter (28) between the inert gas diffuser (30) and the first faces (13) of said sheets (12), and that it comprises a surface provided with a groove pressing against the first faces (13) of the adjacent sheets (12), said groove being arranged facing the area to be welded.

14. The method according to any one of claims 1 to 13, **characterized in that** welding is performed by a welding method chosen from TIG welding, MIG welding, plasma welding, laser welding and electron beam welding.

15. The method according to any one of claims 1 to 14, **characterized in that** concrete pouring is preceded by an inspection step of the weld bead (32) comprising a penetrant inspection test, an X-ray inspection test and at least one visual inspection test.

## Patentansprüche

1. Verfahren zur Herstellung einer Wanne für ein Schwimmbecken, einen Sammel- oder Schutzbehälter, das mindestens das Anbringen einer Reihe von angrenzenden Blechen (12) und das Verschweißen der Bleche (12) miteinander zur Bildung eines Teils einer Wannenfläche durch Anbringen einer Schweißnaht (32) und den folgenden Schritt umfasst:
- Anbringung der Bleche (12) parallel zu einer ersten Wand in einem von dieser vorbestimmten Abstand, wobei jedes Blech (12) Elemente (16) zur Verankerung an einer ersten Fläche (13) umfasst, die gegenüber der ersten Wand (3, 51) angeordnet ist,
**dadurch gekennzeichnet, dass** die Montage einer Reihe angrenzender Bleche (12) das Einsetzen einer Schiene (22) umfasst, die sich zwischen den Verankerungselementen (16) zweier angrenzender Bleche befindet und Seitenwände und einen Boden umfasst, der im Bereich der mit den beiden angrenzenden Blechen (12) zu verschweißenden Zone einen Bereich zum Kontrollieren der Schweißnaht (32) umfasst,
sowie dadurch, dass das Schweißen der angrenzenden Bleche (12) eine vollkommen durchdringende Stumpfverbindung ist, die von dem Kontrollbereich aus zu sehen ist und auf das Schweißen ein Vergießen von Beton zwischen der ersten Wand (3, 51) und den Blechen (12) folgt, wobei die Verankerungselemente (16) der Bleche (12) nach dem Vergießen des Betons vollkommen von der Schweißnaht (32) getrennt sind.

2. Verfahren nach Anspruch 1, **dadurch gekennzeichnet, dass** jedes Blech (12) an der ersten Fläche (13) L-förmige Winkel (15) umfasst, die mit dem entsprechenden Winkel (15) eines angrenzenden Blechs (12) gegenüber der zu schweißenden Zone beim Anbringen und bei der Befestigung der angrenzenden Bleche (12) jeweils die Schiene (22) bilden.

3. Verfahren nach Anspruch 1, **dadurch gekennzeichnet, dass** die Schiene (22) eine Tropfenfängermulde (40) ist.

4. Verfahren nach Anspruch 3, **dadurch gekennzeichnet, dass** die Tropfenfängermulde (40) als U ausgebildet ist, mit parallelen Armen, die sich quer zu den beiden angrenzenden Blechen (12) erstrecken.

5. Verfahren nach einem der Ansprüche 3 und 4, **dadurch gekennzeichnet, dass** eine Dichtung (53), die die Dichtheit zwischen zwei angrenzenden Blechen (12) und der Tropfenfängermulde (40) durch Aktivierung eines Systems zum Unterdrucksetzen (54) sicherstellt, vor dem Vergießen des Betons in der Tropfenfängermulde (40) angeordnet wird, und dadurch, dass vor dem Aushärten des Betons das System zum Unterdrucksetzen (54) deaktiviert und die Dichtung (53) entfernt wird.

6. Verfahren nach Anspruch 5, **dadurch gekennzeichnet, dass**, nachdem die Dichtung (53) aus einer elastischen Zunge (56) besteht, die in einer Ruhestellung im Wesentlichen gekrümmt und an ihren beiden Enden mit einem Gummipuffer (57) versehen ist, die Dichtung (53) in ihrer Ruhestellung in der Tropfenfängermulde (40) angeordnet wird, indem jeder Gummipuffer (57) an ein Blech (12) anliegend angebracht wird, und zwar beidseits der zu schweißenden Zone oder der Schweißnaht (32).

7. Verfahren nach Anspruch 6, **dadurch gekennzeichnet, dass** die Dichtung (53) beim Aktivieren des Systems zum Unterdrucksetzen (54) flachgedrückt wird und die Gummipuffer (57) die Dichtheit zwischen den Armen der Mulde (40) und den Blechen (12) sicherstellen.

8. Verfahren nach einem der Ansprüche 1 bis 7, **dadurch gekennzeichnet, dass** das Anbringen der Bleche darin besteht, die Bleche (12) an einer zweiten Wand (50) anzubringen, die mit der ersten Wand (51) eine Verschalung bildet, wobei die Bleche (12) gegenüber der ersten Wand (51) angeordnet sind.

9. Verfahren nach Anspruch 8, **dadurch gekennzeichnet, dass** die zweite Wand (50) mindestens eine Öffnung (50b) aufweist, die die Herstellung der Schweißnaht (32) der Bleche (12) auf der Seite (50c) der zweiten Wand (50) ermöglicht, die der Seite (50a) gegenüberliegt, die die Bleche (12) aufnimmt.

10. Verfahren nach einem der Ansprüche 8 und 9, **dadurch gekennzeichnet, dass** es die Anbringung einer Armierung (52) zwischen den Blechen (12) und der ersten Wand (51) umfasst, und zwar vor der Anbringung der Tropfenfängermulde (40), welche Tropfenfängermulde (40) an die Armierung (52) anliegt, sowie dadurch, dass das Verschweißen der Bleche (12) vor dem Anbringen der Armierung (52) erfolgt.

11. Verfahren nach einem der Ansprüche 1 bis 10, **dadurch gekennzeichnet, dass**, nachdem das Verschweißen der Bleche (12) nach dem Einsetzen der Schiene erfolgt, es darin besteht, dass es folgende Schritte umfasst:
- Einsetzen eines beweglichen Vorschubwagens (24) in die Schiene (22), welcher Wagen ein Zerstäubungsvolumen eines Schutzgases umfasst, das mit den beiden angrenzenden Blechen (12) unter Wirkung eines Trägerelements in Kontakt kommt, das zwischen der Schiene (22) und dem Vorschubwagen (24) aufliegt,
- Herstellung der Schweißnaht (32) zwischen zwei angrenzenden Blechen (12) in einer Neutralgas-Atmosphäre
- und Zurückziehen des Vorschubwagens (24).

12. Verfahren nach Anspruch 11, **dadurch gekennzeichnet, dass** der Vorschubwagen (24) eine dichte Rinne (28) umfasst, die an die Bleche (12) anliegend gehalten wird, wobei ein Inertgaszerstäuber (30) in der dichten Rinne (28) angeordnet ist

13. Verfahren nach Anspruch 12, **dadurch gekennzeichnet, dass** eine Keramikplatte (31) zwischen der dichten Rinne (28) zwischen dem Inertgaszerstäuber (30) und den ersten Flächen (13) der Bleche (12) angeordnet ist, die eine Oberfläche umfasst, die mit einer Rille versehen ist, die an die ersten Flächen (13) der angrenzenden Bleche (12) anliegt, welche Rille gegenüber der zu schweißenden Zone angeordnet ist.

14. Verfahren nach einem der Ansprüche 1 bis 13, **dadurch gekennzeichnet, dass**, das Schweißen mit einem Schweißverfahren erfolgt, das aus folgenden Verfahren ausgewählt ist: WIG, MIG, Plasmaschweißen, Laserschweißen und Elektronenstrahlschweißen.

15. Verfahren nach einem der Ansprüche 1 bis 14, **dadurch gekennzeichnet, dass**, dem Betonguss ein Schritt der Prüfung der Schweißnaht (32) vorausgeht, der einen farbeindringtest, einen Kontrolltest mit Röntgenstrahlen und mindestens einen visuellen Prüftest umfasst.
